# EUROPÄISCHE PATENTSCHRIFT

(11) **EP 0 481 984 B1**
(45) Veröffentlichungstag und Bekanntmachung des Hinweises auf die Patenterteilung: **19.01.1994**
(21) Anmeldenummer: 89907671.5
(22) Anmeldetag: 10.07.1989
(51) Int. Cl.: H02K 3/40, H02K 3/48

(54) **LEITERWICKLUNGSANORDNUNG FÜR EINE ELEKTRISCHE GROSSMASCHINE**
CONDUCTOR-WINDING ASSEMBLY FOR A LARGE ELECTRICAL MACHINE
AGENCEMENT D'ENROULEMENTS CONDUCTEURS POUR UN GROS MOTEUR ELECTRIQUE

(43) Veröffentlichungstag der Anmeldung: 29.04.1992
(73) Patentinhaber: SIEMENS AKTIENGESELLSCHAFT, 80333 München (DE)
(72) Erfinder: WICHMANN, Arnold, D-4330 Mülheim (DE)
(86) Internationale Anmeldenummer: DE8900456
(87) Internationale Veröffentlichungsnummer: WO9101059

(56) Entgegenhaltungen:
- US-A- 3 990 029
- PATENT ABSTRACTS OF JAPAN vol. 4, no. 130 (E-25)(612) 12 September 1980, & JP-A-55 83434 (MEIDENSHA) 23 Juni 1980.
- PATENT ABSTRACTS OF JAPAN vol. 4, no. 157 (E-32)(639) 04 November 1980, & JP-A-55 106046 (HITACHI) 14 August 1980.
- PATENT ABSTRACTS OF JAPAN vol. 7, no. 200 (E-196)(1345) 03 September 1983, & JP-A-58 99238 (HITACHI) 13 Juni 1983.
- PATENT ABSTRACTS OF JAPAN vol. 2, no. 19 (E-77)(11251) 08 Februar 1978, & JP-A-52 138601 (MITSUBISHI) 18 November 1977.

## Beschreibung

Die vorliegende Erfindung bezieht sich auf eine Leiterwicklungsanordnung für eine elektrische Großmaschine mit elektrischer Leistungsaufnahme oder -abgabe von mehr als etwa 20 MVA, vorzugsweise mehr als etwa 50 MVA, insbesondere einen Turbogenerator, deren Leiterwicklungen zum Teil aus in Nuten eingelegten Leiteranordnungen bestehen.

Der Aufbau einer Leiterwicklung für eine elektrische Großmaschine erfolgt gemäß dem Stand der Technik in der Weise, daß Wicklungsstäbe in Nuten eingelegt werden, die in einen Trägerkörper eingearbeitet sind, worauf die Nuten mit geeigneten Mitteln verschlossen und die einzelnen Wicklungsstäbe zur Bildung der Leiterwicklungen elektrisch miteinander verbunden werden.

Eine detaillierte Beschreibung des Aufbaus üblicher Wicklungsstäbe findet sich z. B. in der DE-C 31 C2 849. Entsprechend besteht ein Wicklungsstab aus einem elektrisch leitfähigen, in der Regel kupfernen Leiterstab oder einer Mehrzahl solcher Leiterstäbe, die sämtlich oder teilweise zur Führung von Kühlmittel hohl sein können, und einer die Leiteranordnung aus Leiterstab oder Leiterstäben umgebenden Isolierschicht. Diese Isolierschicht wird in der Regel hergestellt, indem die Leiteranordnung mit einem tränkfähigen, einen festen Isolierstoff wie z. B. Glimmer enthaltenden Band umwickelt, die Bewicklung mit einem flüssigen, härtbaren Füllstoff wie z. B. Kunstharz getränkt und schließlich der Füllstoff ausgehärtet wird. Da das getränkte Isoliermaterial vor der Aushärtung keinerlei Formstabilität besitzt, muß die Aushärtung in einer Preßform erfolgen, in die der Wicklungsstab einzulegen ist.

In der JP-A 52-138 601 und der JP-A-55 106 046 wird vorgeschlagen, an üblichen Wicklungsstäben vor dem Einbau in einen Trägerkörper Maßnahmen vorzunehmen, die der Erhöhung der Betriebssicherheit der mit dem Trägerkörper aufzubauenden elektrischen Großmaschine dienen sollen. In der erstgenannten Schrift wird vorgeschlagen, die Außenoberfläche eines Wicklungsstabes mit einer Schmiermittelschicht zu versehen, so daß ein Festhaften des Wicklungsstabes in der Nut unterbunden wird. Die Schmiermittelschicht kann dabei elektrisch leitfähig sein (durch eine Beimischung elektrisch leitfähiger Partikel wie z. B. Rußteilchen zu der Grundsubstanz). Die freie Beweglichkeit eines Wicklungsstabes in der Nut eines Trägerkörpers ist zwar geeignet, evtl. auftretende unterschiedliche Dehnungen von Wicklungsstab bzw. Trägerkörper aufgrund thermischer Beanspruchungen zu kompensieren, sie erfordert jedoch notwendigerweise einen hohen Aufwand zur Fixierung des Wicklungsstabes außerhalb der Nut (in den sogenannten "Wickelköpfen"). In der JP-A-55 106 046 wird angeregt, die Außenoberfläche der Isolierung des Wicklungsstabes mit einem halbleitfähigen Band zu umwickeln, womit Glimmentladungen in der Nut des Trägerkörpers verhindert werden können. Zusätzlich zu dem um den Wicklungsstab gewickelten halbleitfähigen Band kann dabei ein entlang des Wicklungsstabes geführtes Band mit relativ hoher elektrischer Leitfähigkeit vorgesehen werden, das den Kontakt des halbleitfähigen Bandes mit der Nutwand in dem Trägerkörper verbessert.

Beim Betrieb einer elektrischen Großmaschine sind die Wicklungen erheblichen Kräften ausgesetzt. Im Fall feststehender Wicklungen handelt es sich in erster Linie um magnetisch bedingte Kräfte, im Falle rotierender Wicklungen sind zusätzlich Zentrifugalkräfte bedeutsam. Möglichkeiten zur Befestigung der Wicklungen in den Nuten werden beispielsweise in der DE-A 30 16 990 vorgestellt; neben ausreichend belastbaren Nutverschlußmitteln werden federnde Elemente in die Nuten eingebracht, um die Wicklungen spielfrei zu fixieren.

Als besonders wirtschaftliches Verfahren zur Herstellung der Isolationen der Leiteranordnungen für elektrische Großmaschinen wurde in den letzten Jahren das sogenannte Ganztränkverfahren ausgearbeitet, das in ähnlicher Form bereits zur Fertigung von Kleintransformatoren und dergleichen bekannt war. Im Wege des Ganztränkverfahrens wird zunächst der Trägerkörper mit Leiterwicklungen ohne vorherige Füllstofftränkung komplett montiert, insbesondere die Leiteranordnungen mit ungetränkten Isolierstoffummantelungen eingebaut, und anschließend als Ganzes imprägniert. Da die Leiteranordnungen ihre Füllstoffimprägnierung erst in fertig eingebautem Zustand erhalten, entfällt der hohe Aufwand der Herstellung von Wicklungsstäben mit formgetreuen Isolierungen vor dem Einbau.

Ein Vorschlag zur Ganztränkung eines Trägerkörpers mit Leiterwicklungen für eine elektrische Großmaschine ist der JP-A-5 583 434 entnehmbar. Entsprechend diesem Vorschlag werden übliche Wicklungsstäbe, also Wicklungsstäbe aus Leiteranordnungen mit fertig hergestellten Isolationen, mit einem tränkfähigen, halbleitfähigen Band umwickelt, auf das ein weiteres Band aufgebracht wird, das gewisse Gleiteigenschaften aufweist. Derart vorbereitete Wicklungsstäbe werden in die Nuten des Trägerkörpers eingelegt, und die Bewicklungen erhalten eine Tränkung aus aushärtbarem Kunstharz. Auch nach diesem Vorschlag wird eine Anordnung erzielt, bei der jeder Wicklungsstab frei in der Nut gleiten kann. Entsprechend umständlich sind die Maßnahmen, die, wie bereits ausgeführt, zur Fixierung der Wicklungsstäbe erforderlich sind. Auch die Notwendigkeit, zum Aufbau der Anordnung bereits fertig isolierte Wicklungsstäbe verwenden zu müssen, weist den Vorschlag aus wirtschaftlichen Gründen als wenig praktikabel aus.

Dem immerhin beträchtlichen Aufwand des Ganztränkverfahrens - u. a. ist ein Gefäß mit Abmessungen von mehreren Metern zur Aufnahme des Tränkbades für die zu imprägnierenden Anordnungen erforderlich - steht eine Fülle von Vorteilen gegenüber:
Sofern der Füllstoff nur dünnflüssig genug ist, vermag er bei der Imprägnierung jeden in der Anordnung verbliebenen Spalt auszufüllen und diese somit, nach erfolgter Aushärtung, zu einem einzigen kompakten Festkörper werden zu lassen. Damit können hervorragende elektrische Eigenschaften, insbesondere hohe Qualität der Dielektrika, gewährleistet werden;
darüber hinaus kann der ausgehärtete Füllstoff zur Fixierung der Wicklungen in den Nuten beitragen, so daß die Anforderungen an die Nutverschlußmittel unter Umständen beträchtlich reduziert werden können. Auch kann evtl. auf zusätzliche Federelemente zur Fixierung der Lage der Leiteranordnungen verzichtet werden, so daß, bei gegebenen Anforderungen an die elektrische Leistungsfähigkeit, kleinere Bauformen im Vergleich zu konventionellen Maschinen möglich sind.

Für die Imprägnierung wird üblicherweise ein Füllstoff, insbesondere ein Kunstharz, eingesetzt, der bei einer Temperatur aushärtet, die deutlich oberhalb der Betriebstemperatur der Anordnung liegt. Die Betriebstemperatur liegt insbesondere bei einer wassergekühlten elektrischen Großmaschine im Bereich um 100° C, so daß in der Regel ein Füllstoff verwendet wird, dessen Aushärtetemperatur im Bereich von etwa 100° C bis etwa 200° C, vorzugsweise um etwa 150° C, liegt. Zur Aushärtung ist die imprägnierte Anordnung entsprechend auf eine Temperatur zu erwärmen, die der Aushärtetemperatur entspricht oder leicht darüber liegt. Die Erwärmung auf eine Temperatur von typisch etwa 150° C kann u. U. zu merklichen, thermisch bedingten Formänderungen des Trägerkörpers führen, was vor allem bei der Abkühlung nach vollendeter Aushärtung der Imprägnierung problematisch werden kann: Bei der Abkühlung tritt eine gewisse Schrumpfung ein, und in dem Trägerkörper treten Zugspannungen auf. Diese Zugspannungen können, je nach Sprödigkeit des ausgehärteten Füllstoffes, zu Spaltbildungen führen. Durch solche Spalte kann einerseits die Festigkeit in bedenklicher Weise beeinträchtigt werden, andererseits können in den Spalten beim Betrieb Glimmentladungen auftreten, die sowohl die Qualität des Dielektrikums beeinträchtigen als auch im Laufe der Zeit zur Schädigung der Isolation führen können.

Dementsprechend ist es die Aufgabe der vorliegenden Erfindung, eine Anordnung anzugeben, bei der die unkontrollierte Rißbildung ausgeschlossen ist, so daß das Auftreten von Glimmentladungen zusammen mit den daraus resultierenden Beeinträchtigungen vermieden wird.

Zur Lösung dieser Aufgabe wird erfindungsgemäß eine mit einem Füllstoff imprägnierbare Anordnung aus einem Trägerkörper mit Leiterwicklungen, für eine elektrische Großmaschine, angegeben, wobei
a) die Leiterwicklungen Leiteranordnungen aufweisen, die in zugehörige Nuten des Trägerkörpers eingelegt sind;
b) jede Leiteranordnung von einer imprägnierbaren Isolierschicht umgeben ist, die von einer imprägnierbaren ersten Halbleiterlage umhüllt ist;
c) zwischen der ersten Halbleiterlage jeder Leiteranordnung und mindestens einer Nutwand der zugehörigen Nut mindestens eine imprägnierbare zweite Halbleiterlage liegt, die mit der ersten Halbleiterlage elektrisch verbunden ist;
d) zwischen jeder ersten Halbleiterlage und der zweiten Halbleiterlage eine für den Füllstoff durchlässige Trennschicht liegt, durch die eine durch den Füllstoff bewirkbare Verklebung der ersten Halbleiterlage mit der zweiten Halbleiterlage vermindert, jedoch nicht unterbunden wird.

Im Sinne der vorliegenden Erfindung wird die durch thermische Dehn- und Schrumpfprozesse bedingte Rißbildung in dem ausgehärteten Füllstoff in vorbestimmten Zonen konzentriert, wobei sichergestellt ist, daß in diesen Zonen keine übermäßigen, Glimmentladungen auslösenden elektrischen Feldstärken auftreten können. Diese Zonen sind gegeben durch diejenigen Bereiche in den die Leiteranordnungen enthaltenden Nuten des Trägerkörpers, in denen der ausgehärtete Füllstoff mit der Trennschicht in Berührung kommt. Da der Füllstoff mit der Substanz der Trennschicht nicht oder nur wenig verklebt, kann sich an jeder Berührungsstelle ein Spalt bilden, ohne daß es der Schädigung von Material bedarf. Da die Berührungszone von Füllstoff und Trennschicht zwischen zwei elektrisch halbleitfähigen Lagen liegt, die elektrisch miteinander verbunden sind, stellt sie ein Gebiet dar, in dem ein weitgehend konstantes elektrisches Potential vorliegt. Glimmentladungen können daher dort nicht auftreten, so daß eine Beeinträchtigung der dielektrischen Qualitäten des Füllstoffes durch Risse in der Berührungszone weitgehend ausgeschlossen ist. Durch die Einführung einer Trennschicht in die Nut ergibt sich zwar eine Zone, die hinsichtlich ihrer Festigkeit hinter anderen Zonen in der Nut zurückbleibt; die Berücksichtigung dieser vermeintlichen Schwachstelle ist jedoch unter Einbeziehung zweckmäßiger und geläufiger Fixierungsmaßnahmen ohne weiteres möglich.

Gemäß der Erfindung wird durch die Trennschicht die bei der Imprägnierung durch den Füllstoff bedingte Verklebung der ersten Halbleiterlage mit der mindestens einen zweiten Halbleiterlage nicht vollständig unterbunden, sondern es verbleiben, möglichst großflächig verteilt, Kontaktstellen zwischen den Halbleiterlagen. An diesen Kontaktstellen können die Halbleiterlagen miteinander in elektrische Verbindung treten, und es erübrigen sich anderweitig notwendige Einrichtungen, die diesen Kontakt sicherstellen. Auch gewährleistet eine elektrische Verbindung der ersten Halbleiterlage mit der mindestens einen zweiten Halbleiterlage durch die Trennschicht hindurch einen optimalen Potantialausgleich in der Berührungszone von Trennschicht und Füllstoff, da die elektrische Verbindung der Lagen optimal kurz gehalten werden kann und nicht über mehr oder weniger große Schleifen verlaufen muß.

Eine nicht vollständig unterbundene Verklebung der Halbleiterlagen miteinander gewährleistet auch einen gewissen Rest an Festigkeit der Berührungszone von Trennschicht und Füllstoff, die die Stabilität der Anordnung insgesamt unterstützt und vor allem bei Anordnungen, die im Betrieb sehr hoch belastet werden, wünschenswert ist.

Ein wesentlicher Bestandteil der Trennschicht ist ein Trennmittel, das von dem Füllstoff nicht benetzt wird. Als solches Trennmittel ist in dem Fall, daß als Füllstoff ein Kunstharz Verwendung findet, z. B. eine ölige oder fettartige Substanz wie Polytetrafluoräthylen, Silikonmasse o. ä. denkbar. Günstig ist es, ein solches Trennmittel auf einen geeigneten Träger aufzubringen, z. B. eine Textilie mit dem Trennmittel zu imprägnieren oder einer flächig durchlöcherten Folie als Bestandteil das Trennmittel beizugeben. Weiterhin können auch Folien aus nicht benetzbaren Substanzen, wie Polytetrafluoräthylen o. dgl., ggf. durch geeignete Zusätze elektrisch halbleitfähig gemacht und/oder mit Durchlässen für den Füllstoff versehen, verwendet werden.

In günstiger Ausgestaltung der Erfindung, insb. zur Ermöglichung der Fertigung der erfindungsgemäßen Anordnung im Rahmen bewährter Abläufe, ist die erste Halbleiterlage einer Leiteranordnung ein auf die Isolierschicht gewickeltes Band aus einer halbleitfähigen Textilie, insb. einem Gewebe oder einem Vlies aus einem Kunststoff, dem leitfähige Pigmente beigegeben sind. Das Material der Halbleiterlage ist damit dem Material der Isolierschicht, die in der Regel durch eine Bewicklung mit einem isolierstoffhaltigen Band gegeben ist, ähnlich, und die Verarbeitung des Materials der Halbleiterlage kann in gleicher Weise wie die Aufbringung der Isolierschicht erfolgen. Eine rationelle Fertigung wird damit ermöglicht. Demselben Zweck dient es, auch die zweite Halbleiterlage als auf den Wicklungsstab gewickeltes Band aus einer halbleitfähigen Textilie oder dgl. auszuführen.

Unter Umständen kann auch eine Trennschicht eingesetzt werden, die ihrerseits halbleitend ist. Als halbleitende Trennschicht könnte insbesondere ein Trennmittel dienen, das mit halbleitfähigen Pigmenten versehen ist, oder es könnte eine halbleitfähige Textilie, die mit einem Trennmittel imprägniert ist, oder eine halbleitfähige Folie Einsatz finden.

Eine weitere, günstige Ausgestaltung der Erfindung besteht darin, die Trennschicht mit dem Material einer der Halbleiterlagen zu vereinigen, insbesondere die Trennschicht als Beschichtung einer Halbleiterlage mit einem Trennmittel auszuführen. Derart verfolgt die Einbringung der Trennschicht in die Anordnung gleichzeitig mit der entsprechenden Halbleiterlage, und der Herstellungsprozeß wird substantiell vereinfacht. In günstiger Weiterbildung der vorliegenden Erfindung weist jede Leiteranordnung eine Trennschicht in Form eines auf die erste Halbleiterlage aufgebrachten Bandes auf, wobei das Band ein Trennmittel enthält, das von dem Füllstoff nicht benetzt wird. Besonders günstig ist es, das die Trennschicht bildende Band auf die erste Halbleiterlage aufzuwickeln. Das Einbringen der Trennschicht ist damit im Rahmen üblicher Methoden möglich.

Eine besonders gute elektrische Verbindung der ersten Halbleiterlage mit der zweiten Halbleiterlage wird erreicht durch die Einbringung mindestens eines Kontaktleiters in Form eines elektrisch leitfähigen Stabes, der derart mit der Trennschicht auf die erste Halbleiterlage aufgebracht ist, daß er sowohl mit der ersten Halbleiterlage als auch mit der jeweiligen zweiten Halbleiterlage in elektrischer Verbindung ist. Besonders vorteilhaft ist es dabei, den mindestens einen Kontaktleiter derart mit dem die Trennschicht bildenden Band auf der ersten Halbleiterlage der Leiteranordnung zu fixieren, daß das Band beim Umwickeln der ersten Halbleiterlage abwechselnd über den Stab und unter den Stab geführt wird. Auch diese Ausgestaltung gestattet eine elektrische Verbindung der ersten Halbleiterlage mit der zweiten Halbleiterlage, die große Schleifen vermeidet. Die Konstanz des elektrischen Potentials in der Berührungszone von Trennschicht und Füllstoff zwischen den Halbleiterlagen wird damit in besonderer Weise gewährleistet, und es wird eine dem Zweck der Erfindung in besonderer Weise entsprechende Anordnung erreicht.

Eine weitere, günstige Ausgestaltung der Erfindung ist dadurch gekennzeichnet, daß für jede Nut mindestens eine zweite Halbleiterlage gegeben ist durch eine mindestens eine Nutwand bedeckende Auskleidung aus halbleitfähigem Material. Im Rahmen dieser Ausführung ist es nicht erforderlich, jede Leiteranordnung mit einer eigenen zweiten Halbleiterlage zu versehen. Ein deutlich verringerter Platzbedarf ist die Folge, so daß es möglich wird, für eine vorgegebene Belastbarkeit besonders kompakte Anordnungen zu erzielen oder aber diese nach weiteren Gesichtspunkten, z. B. hinsichtlich der Funktion der elektrischen Großmaschinen, für die sie bestimmt sind, zu optimieren. Für die Auskleidung der Nut sind die bereits erwähnten halbleitfähigen Textilien gut geeignet; in vorteilhafter Weiterbildung der Konfiguration kann die Nutauskleidung mit der Trennschicht versehen werden, z. B. in Form einer Beschichtung oder auch in Form einer weiteren Auskleidung, die auf die bereits erwähnte Nutauskleidung mit einer halbleitfähigen Textilie aufgebracht wird. Dabei ist es nicht unbedingt erforderlich, die Nutauskleidung an beiden Nutwänden einer Nut mit einer Trennschicht zu versehen; die erfindungsgemäßen Vorteile werden bereits dann erschlossen, wenn die Nutauskleidung an einer einzigen Nutwand mit einer Trennschicht versehen wird. Die feste Verklebung der Leiterwicklungsanordnung mit der Nutwand, die keine Trennschicht aufweist, trägt somit zusätzlich zur Erhöhung der Festigkeit der Anordnung bei.

Die vorliegende Erfindung liefert eine mit einem Füllstoff, insb. einem ausgehärteten Kunstharz, imprägnierte Anordnung in Form eines Trägerkörpers mit Leiterwicklungen für eine elektrische Großmaschine, wobei die Leiterwicklungen z. T. aus in Nuten des Trägerkörpers eingelegten Leiteranordnungen bestehen, wobei jede Nut des Trägerkörpers mindestens eine elektrisch abgeschirmte Zone aufweist, deren Festigkeit im Vergleich zu anderen Zonen in der Nut vermindert ist. Risse im Füllstoff, die beispielsweise durch thermische Ausdehnungs- und Schrumpfprozesse hervorgerufen werden, treten bevorzugt in der erwähnten Zone verminderter Festigkeit auf. Da in dieser Zone keine nennenswerten elektrischen Potentialgefälle auftreten, ist die Funkenbildung in den Rissen praktisch ausgeschlossen, und eine Beeinträchtigung der elektrischen Qualität der Anordnung ist ausgeschlossen. Weiterhin ist die zur Rißbildung neigende Zone gut definiert, so daß trotz der Rißbildung eine Beeinträchtigung der mechanischen Festigkeit der Anordnung ggf. durch gezielte Anwendung festigkeitserhöhender Mittel vermieden werden kann.

Die vorliegende Erfindung liefert Anordnungen mit Letierwicklungen, die nach Imprägnierung mit einem Füllstoff, insb. einem ausgehärteten Kunstharz, als Teile elektrischer Großmaschinen, insb. als Statoren, besonders geeignet sind, da sie besondere Robustheit mit ausgezeichneten elektrischen Qualitäten, verbunden mit der Möglichkeit der Erzielung besonders kompakter Formen zu gegebener Belastbarkeit, aufweisen.

Die weitere Erläuterung der vorliegenden Erfindung erfolgt anhand der in der Zeichnung dargestellten Ausführungsbeispiele; im einzelnen zeigen:
Fig. 1 einen Ausschnitt aus einer erfindungsgemäßen Anordnung, die zur Tränkung vorbereitet ist;
Fig. 2 eine zum Einbau in eine erfindungsgemäße Anordnung vorbereitete besonders geeignete Ausführungsform einer Leiteranordnung;
Fig. 3 einen Ausschnitt aus einer besonders günstig ausgestalteten erfindungsgemäßen Anordnung. .

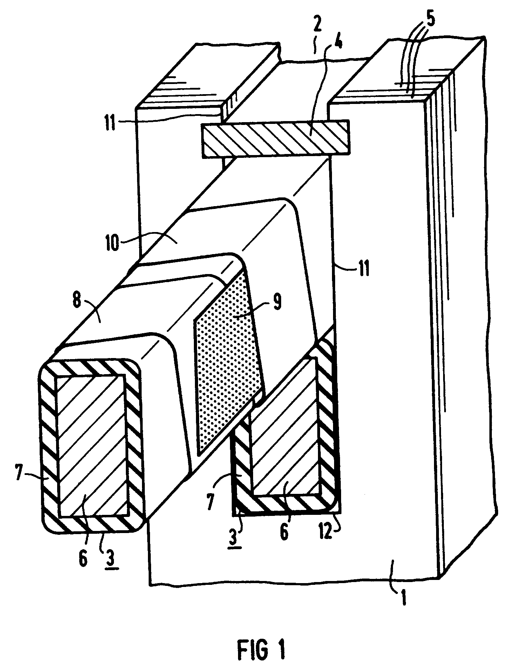

Wie in Fig. 1 schematisch dargestellt, enthält ein Trägerkörper 1 Nuten 2, die zur Aufnahme der Wicklungsstäbe 3 dienen und, nach Einlegen der Wicklungsstäbe 3, mit geeigneten Nutverschlußmitteln 4 verschlossen werden, die dem Fachmann in vielfältigen Ausgestaltungen bekannt sind. Der Trägerkörper 1 kann dabei sowohl in einem einteiligen oder aus nur wenigen Elementen zusammengesetzten Block bestehen, wie z. B. im Falle eines Rotors, oder aus einer Vielzahl einzelner Bleche 5 zusammengesetzt sein, wie es z. B. für Statoren vorgezogen wird. Mischformen sind dabei selbstverständlich, im Rahmen fachmännischer Erwägungen, möglich.

Ein Wicklungsstab 3 enthält als wesentliches Bestandteil eine Leiteranordnung 6, die von einer Isolierschicht 7 umgeben ist. Die Leiteranordnung 6 besteht aus mindestens einem elektrisch leitfähigen Stab, insbesondere einem Kupferstab, und kann, je nach vorgesehener Betriebsbelastung, Kanäle zur Führung von Kühlmittel u. dgl. aufweisen. Die Isolierschicht 7 besteht in aller Regel aus einer Bewicklung mit einem Band, das einen Isolierstoff, wie z. B. Glimmer, enthält und mit einem Füllstoff, wie z. B. Kunstharz, tränkbar ist. Nach vollendeter Füllstoffimprägnierung stellt sich die Isolierschicht 7 dar als im wesentlichen kompakter, homogener Festkörper, in den die faserigen Strukturen des Bandes zusammen mit dem Isolierstoff eingelagert sind.

Im Sinne der vorliegenden Erfindung ist die Isolierschicht 7 des Wicklungsstabes 3 umgeben mit einer ersten Halbleiterlage 8, auf die zumindest an den den Nutwänden 11 zugewandten Seiten des Wicklungsstabes 3 Trennschichten 9 aus einem Material aufgelegt sind, das von dem Füllstoff, mit dem die Anordnung zu imprägnieren ist, nicht oder nur wenig benetzt wird. Die Trennschichten 9 sind mit einer zweiten Halbleiterlage 10, die über die Trennschichten 9 und die erste Halbleiterlage 8 aufgebracht wird, auf dem Wicklungsstab 3 fixiert.

Ist die Leiteranordnung aus Trägerkörper 1, Wicklungsstäben 3 und Nutverschlußmittel 4 komplett montiert, so wird sie mit einem härtbaren Kunstharz oder einem ähnlichen Füllstoff als Ganzes imprägniert, und der Füllstoff wird ausgehärtet. Zur Aushärtung sind dem eigentlichen Füllstoff meistens entsprechende Chemikalien beizumischen, und zur Auslösung des Härtungsprozesses ist eine Erwärmung des Füllstoffes auf eine bestimmte Temperatur, bei üblichen Kunstharzen im Bereich um etwa 150° C, erforderlich. Nach erfolgter Aushärtung wird die Anordnung wieder abgekühlt; dabei kommt es aufgrund des thermischen Schrumpfprozesses zu Zugspannungen innerhalb der Anordnung, insbesondere innerhalb der Nuten 2, die möglicherweise zur Rißbildung führen können.

Ein wesentliches Element der vorliegenden Erfindung ist es, in jeder Nut 2 des Trägerkörpers 1 die entstehenden Risse in vorbestimmten Zonen zu konzentrieren und weiterhin dafür Sorge zu tragen, daß in diesen Zonen keine übermäßigen, Glimmentladungen auslösenden elektrischen Feldstärken auftreten können. Die Zonen sind gegeben durch die Bereiche in der Nut 2, in denen der ausgehärtete Füllstoff mit der Trennschicht 9 in Berührung kommt. Da der Füllstoff mit der Trennschicht 9 nicht oder nur wenig verklebt, kann sich an jeder Berührungsstelle ein Spalt bilden, ohne daß es der Schädigung von Material bedarf. Da die Trennschicht 9 eingeschlossen ist zwischen zwei elektrisch leitfähigen, miteinander verbundenen Schichten aus der ersten Halbleiterlage 8 bzw. der zweiten Halbleiterlage 10, befindet sich die Trennschicht 9 - und damit auch die Berührungszone zwischen Füllstoff und Trennschicht 9 - in einem potentialfreien Gebiet. Elektrische Felder, und damit Glimmentladungen, können in diesem Gebiet nicht auftreten, so daß eine ausgezeichnete elektrische Qualität gewährleistet ist. Durch die Einführung einer Trennschicht 9 in die Nut 2 ergibt sich zwar eine Stelle, die hinsichtlich ihrer Festigkeit hinter anderen Bereichen in der Nut 2 zurückbleibt; jedoch ist die Berücksichtigung dieser vermeintlichen Schwachstelle kein Problem: Alle Mittel, die zur Fixierung von Wicklungsstäben 3 in Nuten 2 von Trägerkörpern 1 dienen können, die keiner Füllstoffimprägnierung unterzogen werden, stehen zur Verfügung. Hervorragende mechanische Eigenschaften, insbesondere im Hinblick auf große Lebensdauer, sind gewährleistet.

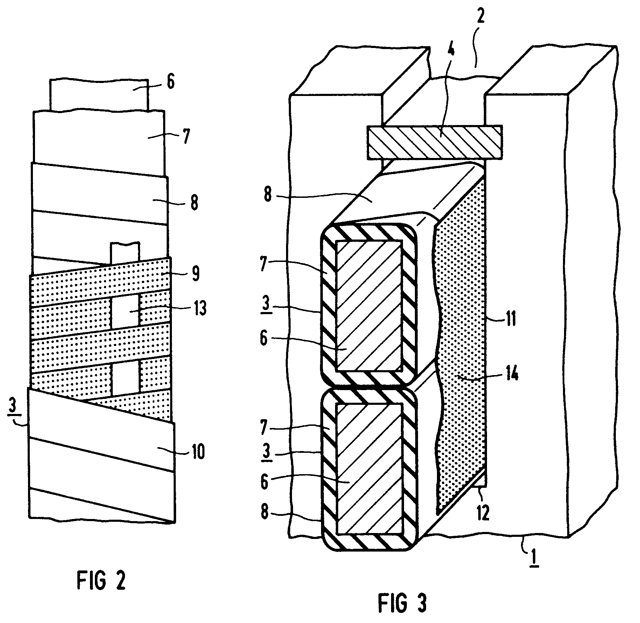

Fig. 2 zeigt eine besondere Ausführung eines Wicklungsstabes 3, wie er im Rahmen der vorliegenden Erfindung Einsatz finden kann. Kennzeichen dieser Ausführungsform ist eine Trennschicht 9 in Form eines Bandes, das um die erste Halbleiterlage 8 auf der Isolierschicht 7 des Wicklungsstabes 3 aufgewickelt ist.

Die leitfähige Verbindung zwischen der ersten Halbleiterlage 8 und der zweiten Halbleiterlage 10, die in der Ausführungsform nach Fig. 1 dadurch gewährleistet war, daß die erste Halbleiterlage 8 und die zweite Halbleiterlage 10 einander stellenweise berührten, wird bei einem Wicklungsstab 3 nach Fig. 2 durch einen zusätzlichen Kontaktleiter 13 aus leitfähigem Material, insbesondere Kupfer, bewirkt, der derart mit der Trennschicht 9 auf die erste Halbleiterlage 8 aufgebracht ist, daß er abwechselnd die erste Halbleiterlage 8 und die zweite Halbleiterlage 10, die auf die Trennlage 9 aufgewickelt ist, berührt. Ein solcher Wicklungsstab 3 gewährleistet damit die Konzentration von Rissen, die aus thermischen Spannungen entstehen, in seiner gesamten Umgebung in einem Bereich, der gegen Glimmentladungen u. dgl. abgesichert ist.

Eine vorteilhafte Ausgestaltung der erfindungsgemäßen Leiterwicklungsanordnung zeigt Fig. 3. Die Wicklungsstäbe 3 weisen lediglich eine erste Halbleiterlage 8 auf, und statt einer in die Außenzone der Wicklungsstäbe 3 eingebrachten Trennschicht 9 erhalten die Nutwände 11 eine Nutauskleidung 14, die wie die Trennschicht 9 von dem Füllstoff nicht benetzt wird und damit die Zone für die kontrollierte Rißbildung in den Bereich um die Nutwand 11 verlegt. Der Potentialausgleich im Bereich der Nutauskleidung 14 wird dadurch bewirkt, daß die erste Halbleiterlage 8 der Wicklungstäbe 3 mit dem Trägerkörper 1 in leitfähige Verbindung gebracht wird; zweckmäßigerweise geschieht dies dadurch, daß der Nutgrund 12 keine Nutauskleidung 14 erhält, so daß die erste Halbleiterlage 8 über den Nutgrund 12 in elektrische Verbindung mit dem Trägerkörper 1 tritt. Sofern auf eine Nutauskleidung 14 für den Nutgrund 12 nicht verzichtet werden kann, bietet sich z. B. für den Nutgrund 12 eine Nutauskleidung 14 an, die, ähnlich wie in Fig. 2 gezeigt, von einem Kontaktleiter 13 durchbrochen wird, der die elektrische Verbindung sicherstellt.

In den Ausführungsbeispielen wurden zwar lediglich Nuten 2 mit zwei Wicklungsstäben 3 vorgestellt; selbstverständlich umfaßt die vorliegende Erfindung nicht nur Systeme mit zwei Wicklungsstäben 3, sondern alle Systeme, die sich in geläufiger Weise aus den vorgestellten, nur zur Illustration dienenden Beispielen ergeben.

Die vorliegende Erfindung liefert Leiterwicklungsanordungen für elektrische Großmaschinen, die die Ausnutzung der Vorteile der Ganztränkung in besonderer Weise im Hinblick auf Minimierung der elektrischen Verluste und Erhöhung der Lebensdauer gestatten.

## Patentansprüche

1. Mit einem Füllstoff imprägnierbare Anordnung aus einem Trägerkörper (1) mit Leiterwicklungen, für eine elektrische Großmaschine, wobei
a) die Leiterwicklungen Leiteranordnungen (6) aufweisen, die in zugehörige Nuten (2) des Trägerkörpers (1) eingelegt sind;
b) jede Leiteranordnung (6) von einer imprägnierbaren Isolierschicht (7) umgeben ist, die von einer imprägnierbaren ersten Halbleiterlage (8) umhüllt ist;
c) zwischen der ersten Halbleiterlage (8) jeder Leiteranordnung (6) und mindestens einer Nutwand (11) der zugehörigen Nut (2) mindestens eine imprägnierbare zweite Halbleiterlage (10) liegt, die mit der ersten Halbleiterlage (8) elektrisch verbunden ist;
d) zwischen jeder ersten Halbleiterlage (8) und der zweiten Halbleiterlage (10) eine für den Füllstoff durchlässige Trennschicht (9) liegt, durch die eine durch den Füllstoff bewirkbare Verklebung der ersten Halbleiterlage (8) mit der zweiten Halbleiterlage (10) vermindert, jedoch nicht unterbunden, wird.

2. Anordnung nach Anspruch 1, **dadurch gekennzeichnet**, daß die Trennschicht (9) aus einer Textilie besteht, die mit einem die Benetzung durch den Füllstoff verhindernden Trennmittel imprägniert ist.

3. Anordnung nach Anspruch 1, **dadurch gekennzeichnet**, daß die Trennschicht (9) aus einer durchlässigen Folie besteht, die ein die Benetzung durch den Füllstoff verhinderndes Trennmittel enthält.

4. Anordnung nach einem der vorhergehenden Ansprüche, **dadurch gekennzeichnet**, daß die erste Halbleiterlage (8) ein auf die Isolierschicht (7) gewickeltes Band aus einer halbleitfähigen Textilie ist.

5. Anordnung nach einem der vorhergehenden Ansprüche, **dadurch gekennzeichnet**, daß jede Leiteranordnung (6) mindestens eine zweite Halbleiterlage (10) aus einem um die Leiteranordnung (6) gewickelten Band aus einer halbleitfähigen Textilie aufweist.

6. Anordnung nach einem der vorhergehenden Ansprüche, **dadurch gekennzeichnet**, daß die erste Halbleiterlage (8) mit der zugehörigen zweiten Halbleiterlage (10) durch die Trennschicht (9) hindurch elektrisch verbunden ist.

7. Anordnung nach einem der vorhergehenden Ansprüche, **dadurch gekennzeichnet**, daß die Trennschicht (9) mit dem Material der ersten Halbleiterlage (8) vereinigt ist.

8. Anordnung nach Anspruch 7, **dadurch gekennzeichnet**, daß die Trennschicht (9) eine Beschichtung der ersten Halbleiterlage (8) ist.

9. Anordnung nach einem der Ansprüche 1 bis 6, **dadurch gekennzeichnet**, daß die Trennschicht (9) mit dem Material der zweiten Halbleiterlage (10) vereinigt ist.

10. Anordnung nach Anspruch 9, **dadurch gekennzeichnet**, daß die Trennschicht (9) eine Beschichtung der zweiten Halbleiterlage (10) ist.

11. Anordnung nach einem der Ansprüche 1 bis 6, **dadurch gekennzeichnet**, daß jede Leiteranordnung (6) eine Trennschicht (9) in Form eines auf die erste Halbleiterlage (8) aufgebrachten Bandes aufweist, wobei das Band ein Trennmittel enthält, das die Benetzung durch den Füllstoff verhindert.

12. Anordnung nach Anspruch 11, **dadurch gekennzeichnet**, daß das Band auf die erste Halbleiterlage (8) aufgewickelt ist.

13. Anordnung nach Anspruch 11 oder 12, **dadurch gekennzeichnet**, daß die elektrische Verbindung der ersten Halbleiterlage (8) mit der zugehörigen zweiten Halbleiterlage (10) durch mindestens einen Kontaktleiter (13) in Form eines elektrisch leitfähigen Stabes gegeben ist, der derart mit der Trennschicht (9) auf die erste Halbleiterlage (8) aufgebracht ist, daß er sowohl mit der ersten Halbleiterlage (8) als auch mit der zweiten Halbleiterlage (10) in elektrischer Verbindung ist.

14. Anordnung nach einem der vorhergehenden Ansprüche, **dadurch gekennzeichnet**, daß die zweite Halbleiterlage (10) eine mindestens eine Nutwand (11) bedeckende Nutauskleidung (14) aus halbleitfähigem Material ist.

15. Anordnung nach Anspruch 14, **dadurch gekennzeichnet**, daß die Nutauskleidung (14) aus einer halbleitfähigen Textilie besteht.

16. Anordnung nach Anspruch 14 oder 15, **dadurch gekennzeichnet**, daß an nur einer Nutwand (11) jeder Nut (2) die Nutauskleidung (14) mit einer Trennschicht (9) versehen ist.

17. Verwendung einer Anordnung nach einem der vorhergehenden Ansprüche, die mit einem Füllstoff, insbesondere einem ausgehärteten Kunstharz, imprägniert ist, als Teil einer elektrischen Großmaschine, insbesondere als Stator oder als Rotor.

18. Mit einem Füllstoff, insbesondere einem ausgehärteten Kunstharz, imprägnierte Anordnung nach einem der Ansprüche 1 bis 16, wobei jede Nut (2) mindestens eine, im wesentlichen parallel zu einer Nutwand (11) liegende, elektrisch abgeschirmte Zone aufweist, deren Festigkeit kleiner ist als diejenige anderer Zonen in der Nut (2).

## Claims

1. A filler-impregnatable device comprising a carrier body (1) having conductor windings, for a large electrical machine, wherein
a) the conductor windings comprise conductor devices (6) which are disposed in associated slots (2) in the carrier body (1);
b) each conductor device (6) is enclosed by an impregnatable insulating layer (7), which is enveloped by an impregnatable first semi-conductor layer (8);
c) arranged between the first semi-conductor layer (8) of each conductor device (6) and at least one slot wall (11) of the associated slot (2) is at least one impregnatable second semiconductor layer (10), which is electrically connected to the first semi-conductor layer (8);
d) arranged between each first semi-conductor layer (8) and the second semi-conductor layer (10) is a filler-permeable separating layer (9), which reduces but does not prevent adhesion of the first semi-conductor layer (8) to the second semi-conductor layer (10) to be effected by the filler.

2. A device according to claim 1, characterised in that the separating layer (9) is a textile, which is impregnated with a separating agent preventing moistening by the filler.

3. A device according to claim 1, characterised in that the separating layer (9) is a permeable film containing a separating agent preventing moistening by the filler.

4. A device according to one of the preceding claims, characterised in that the first semi-conductor (8) is a strip of semi-conducting textile wound onto the insulating layer (7).

5. A device according to one of the preceding claims, characterised in that each conductor device (6) comprises at least one second semi-conductor layer (10) formed by a strip of semi-conducting textile wound around the conductor devise (6).

6. A device according to one of the preceding claims, characterised in that the first semi-conductor layer (8) is electrically connected to the associated second semi-conductor layer (10) through the separating layer (9).

7. A device according to one of the preceding claims, characterised in that the separating layer (9) is united with the material of the first semi-conductor layer (8).

8. A device according to claim 7, characterised in that the separating layer (9) is a coating of the first semi-conductor layer (8).

9. A device according to one of claims 1 to 6, characterised in that the separating layer (9) is united with the material of the second semi-conductor layer (10).

10. A device according to claim 9, characterised in that the separating layer (9) is a coating of the second semi-conductor layer (10).

11. A device according to one of claims 1 to 6, characterised in that each conductor device (6) comprises a separating layer (9) in the form of a strip applied onto the first semi-conductor layer (8), the strip containing a separating agent preventing moistening by the filler.

12. A device according to claim 11, characterised in that the strip is wound onto the first semi-conductor layer (8).

13. A device according to claim 11 or 12, characterised in that the electrical connection between the first semi-conductor layer (8) and the associated second semi-conductor layer (10) is effected by at least one contact conductor (13) in the form of an electrically conductive bar, which is applied with the separating layer (9) onto the first semi-conductor layer (8) in such a manner that it is electrically connected to both the first semi-conductor layer (8) and the second semi-conductor layer (10).

14. A device according to one of the preceding claims, characterised in that the second semi-conductor layer (10) is a slot liner made of semi-conducting material covering at least one slot wall (11).

15. A device according to claim 14, characterised in that the slot liner (14) is a semi-conducting textile.

16. A device according to claim 14 or 15, characterised in that each slot (11) is provided on only one slot wall (11) with the slot liner (14) with a separating layer (9).

17. Use of a device according to one of the preceding claims, impregnated with a filler, more particularly a hardened synthetic resin, as part of a large electrical machine, more particularly as a stator or rotor.

18. A device according to one of claims 1 to 16 impregnated with a filler, more particularly a hardened synthetic resin, each slot (2) comprising at least one electrically shielded zone disposed substantially parallel to a slot wall (11) and having less strength than the other zones in the slot (2).

## Revendications

1. Dispositif pouvant être imprégné d'une charge, constitué d'un support (1) ayant des enroulements conducteurs et destinée à une machine électrique de grandes dimensions, dans lequel
a) les enroulements conducteurs comportent des structures conductrices (6), qui sont insérées dans des encoches associées (2) du support (1);
b) chaque structure conductrice (6) est entourée d'une couche isolante (7) qui peut être imprégnée et qui est enveloppée d'une première couche semiconductrice (8) suceptible d'être imprégnée;
c) entre la première couche semiconductrice (8) de chaque structure conductrice (6) et au moins une paroi (11) de l'encoche(2) associée est interposée au moins une seconde couche semiconductrice (10) qui peut être imprégnée et qui est reliée électriquement à la première couche semiconductrice (8);
d) entre la première couche semiconductrice (8) et la seconde couche semiconductrice (10) est interposée une couche de séparation (9), qui est perméable à la charge et par laquelle tout collage, pouvant être provoqué par la charge, de la première couche semiconductrice (8) à la seconde couche semiconductrice (10) est réduit, mais non supprimé.

2. Dispositif suivant la revendication 1, caractérisé par le fait que la couche de séparation (9) est constituée d'un textile, imprégné d'un agent de séparation empêchant le mouillage par la charge.

3. Dispositif suivant la revendication 1, caractérisé par le fait que la couche de séparation (9) est constituée d'une feuille perméable, qui contient un agent de séparation empêchant le mouillage par la charge.

4. Dispositif suivant l'une des revendications précédentes, caractérisé par le fait que la première couche semiconductrice (8) est une bande enroulée sur la couche isolante (7) et en un textile semiconducteur.

5. Dispositif suivant l'une des revendications précédentes, caractérisé par le fait que chaque structure conductrice (6) comporte au moins une seconde couche semiconductrice (10) constituée d'une bande enroulée sur la structure conductrice (6) et en un textile semiconducteur.

6. Dispositif suivant l'une des revendications précédentes, caractérisé par le fait que la première couche semiconductrice (8) est reliée électriquement à la seconde couche semiconductrice (10) associée à travers la couche de séparation (9).

7. Dispositif suivant l'une des revendications précédentes, caractérisé par le fait que la couche de séparation (9) est réunie au matériau de la première couche semiconductrice (8).

8. Dispositif suivant la revendication 7, caractérisé par le fait que la couche de séparation (9) est un revêtement de la première couche semiconductrice (8).

9. Dispositif suivant l'une des revendications 1 à 6, caractérisé par le fait que la couche de séparation (9) est réunie au matériau de la seconde couche semiconductrice (10).

10. Dispositif suivant la revendication 9, caractérisé par le fait que la couche de séparation (9) est un revêtement de la seconde couche semiconductrice (10).

11. Dispositif suivant l'une des revendications 1 à 6, caractérisé par le fait que chaque structure conductrice (6) comporte une couche de séparation (9) sous la forme d'une bande déposée sur la première couche semiconductrice (8), la bande contenant un agent de séparation qui empêche le mouillage par la charge.

12. Dispositif suivant la revendication 11, caractérisé par le fait que la bande est enroulée sur la première couche semiconductrice (8).

13. Dispositif suivant la revendication 11 ou 12, caractérisé par le fait que la liaison électrique de la couche semiconductrice (8) avec la seconde couche semiconductrice (10) associée est donnée par au moins un conducteur de contact (13) se présentant sous la forme d'un barreau électriquement conducteur qui est disposé avec la couche de séparation (9) sur la première couche semiconductrice (8) de sorte qu'il est raccordé électriquement aussi bien à la première couche semiconductrice (8) qu'à la seconde couche semiconductrice (10).

14. Dispositif suivant l'une des revendications précédentes, caractérisé par le fait que la seconde couche semiconductrice (10) est un garnissage (14) qui recouvre au moins une paroi d'encoche (11) et est en un matériau semiconducteur.

15. Dispositif suivant la revendication 14, caractérisé par le fait que le garnissage (14) de l'encoche est en un textile semiconducteur.

16. Dispositif suivant la revendication 14 ou 15, caractérisé par le fait que le garnissage (14) de chaque encoche n'est pourvu d'une couche de séparation (9) une paroi (11) de l'encoche.

17. Utilisation d'un dispositif suivant l'une des revendications précédentes, qui est imprégné d' une charge, notamment d'une résine synthétique durcie, en tant que partie d'une machine électrique de grandes dimensions, notamment en tant que stator ou rotor.

18. Dispositif imprégné d'une charge, notamment d'une résine synthétique durcie, suivant l'une des revendications 1 à 16, dans lequel chaque encoche (2) comporte au moins une zone blindée électriquement, qui est sensiblement parallèle à une paroi (11) de l'encoche et dont la solidité est inférieure à celle d'autres zones présentes dans l'encoche (2).
